# EUROPEAN PATENT APPLICATION

(11) **EP 4 254 273 A1**
(43) Date of publication of application: **04.10.2023**
(21) Application number: 23153237.5
(22) Date of filing: 25.01.2023
(51) Int. Cl.: G06N 3/096, G06N 3/09

(54) **MACHINE LEARNING PROGRAM, MACHINE LEARNING APPARATUS, AND MACHINE LEARNING METHOD**

(30) Priority: 28.03.2022 JP 2022051602
(71) Applicant: Fujitsu Limited, Kawasaki-shi, Kanagawa 211-8588 (JP)
(72) Inventor: Katoh, Takashi, Kawasaki-shi, Kanagawa, 211-8588 (JP); Uemura, Kento, Kawasaki-shi, Kanagawa, 211-8588 (JP); Yasutomi, Suguru, Kawasaki-shi, Kanagawa, 211-8588 (JP)
(74) Representative: Hoffmann Eitle

(57) **Abstract**

A machine learning program that causes at least one computer to execute a process, the process includes estimating a first label distribution of unlabeled training data based on a classification model and an initial value of a label distribution of a transfer target domain, the classification model being trained by using labeled training data which corresponds to a transfer source domain and unlabeled training data which corresponds to the transfer target domain; acquiring a second label distribution based on the labeled training data; acquiring a weight of each label included in the labeled training data and the unlabeled training data based on a difference between the first label distribution and the second label distribution; and re-training the classification model by the labeled training data and the unlabeled training data reflected the weight of each label.

## Description

### FIELD

The embodiment discussed herein is related to a machine learning program, a machine learning apparatus, a machine learning method.

### BACKGROUND

Transfer training is known in which a machine learning model having been trained in a certain domain (region) is used in another domain in machine learning to realize additional training with a small amount of data.

In the transfer training, transductive training is known in which training is performed with labeled data and labeling is performed on unlabeled data. For example, the transductive training is used for, for example, a case where labeled data created in an experimental environment is expanded to a plurality of application targets.

With such transductive training, in a case where there is a difference in characteristics of data sets (domains) between a transfer source and a transfer target, creation of a model using features unique to the transfer source degrades accuracy of the model in the transfer target.

Accordingly, in the transductive training of related art, the features common to the domains are selected and created by using a distribution of the features as a clue, thereby suppressing the reduction of the accuracy due to features unique to an application source.

Japanese National Publication of International Patent Application No. 2009-543254, Japanese Laid-open Patent Publication Nos. 2016-143094 and 2009-237923, and U.S. Patent Application Publication No. 2015/0339591 are disclosed as related art.

### SUMMARY

### [TECHNICAL PROBLEM]

However, in such transductive training of related art, in a case where there is a difference in the distribution of labels between the transfer source domain and the transfer target domain, there is a problem in that distributions of the features do not coincide with each other either, and an incorrect transfer, for example, an estimation error occurs. The distribution of the labels refers to an appearance frequency of the labels on a class-by-class basis.

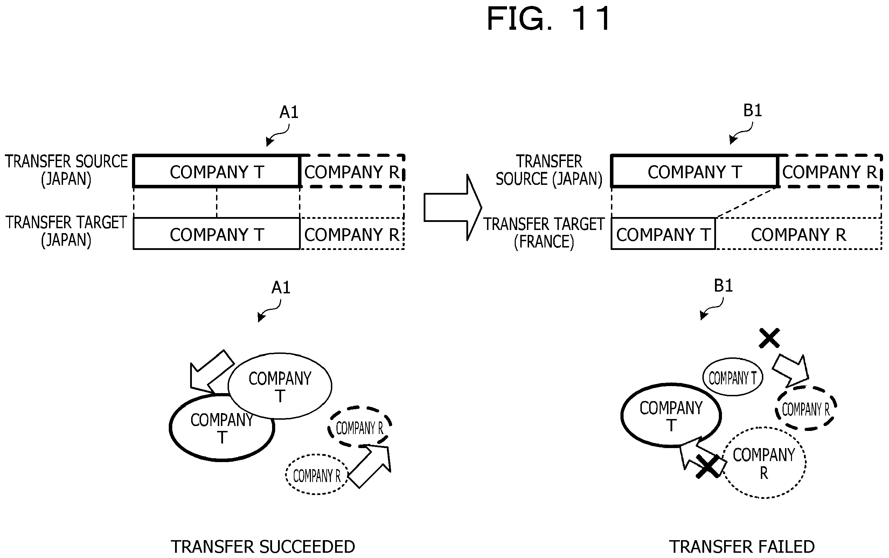

FIG. 11 is a diagram illustrating a comparison between label distributions of the transfer source domain and label distributions of the transfer target domain.

This FIG. 11 indicates label distributions of company T and company R in both the transfer source domain and the transfer target domain with respect to a classification model that presumes a manufacturer name from an image of an automobile. For example, company T is a Japanese manufacturer and company R is a French manufacturer.

In each of sign A1 and sign B1 of FIG. 11, both the label distribution of the transfer source domain and the label distribution of the transfer target domain are indicated. Sign A1 denotes an example in which both the transfer source domain and the transfer target domain are Japan. In the example denoted by sign A1, label distributions are formed in which company T exceeds company R in both of the transfer source domain and the transfer target domain, and the label distributions in the transfer source domain and the transfer target domain are substantially the same.

Meanwhile, sign B1 denotes an example in which the transfer source domain is Japan and the transfer target domain is France. A label distribution is formed in which company T exceeds company R in the transfer source domain. In contrast, a label distribution is formed in which company R exceeds company T in the transfer target domain. For example, there is a difference in the label distribution between the transfer source domain and the transfer target domain.

In each of sign A2 and sign B2 of FIG. 11, the distribution of the feature in the transfer source domain and the transfer target domain are indicated. Sign A2 denotes an example in which both the transfer source domain and the transfer target domain are Japan, and sign B2 denotes an example in which the transfer source domain is Japan and the transfer target domain is France.

In a case where the distributions of labels in transfer source data and transfer target data coincide with each other, the distributions of features in the transfer source data and the transfer target data also coincide with each other as indicated by sign A2, and transfer succeeds without reduction of model accuracy in the transfer target.

In contrast, in a case where there is a difference in the distribution of labels between the transfer source data and the transfer target data as indicated by sign B2, the distributions of features do not coincide with each other, and incorrect transfer occurs. For example, the transfer fails.

Also, in a case where there is a difference in the label distribution between the transfer source domain and the transfer target domain, estimation by the machine learning model is biased by influence of the label distribution of the transfer source. Thus, estimation accuracy of the machine learning model reduces. The transductive training is originally performed under a condition in which the label distributions of the transfer source and the transfer target are similar to each other. Thus, when transfer to a domain having a difference in the label distribution is attempted, the assumption of the transfer training does not hold.

Semi-supervised training in which machine learning is performed by combining supervised training and unsupervised training is also known. However, even in such semi-supervised training, in an environment in which there is a difference in the label distribution between the transfer source domain and the transfer target domain, machine learning with incorrect labels proceeds due to a difference in the distribution of features caused by a difference between the transfer source domain and the transfer target domain. Thus, the estimation accuracy reduces also in the semi-supervised training.

In one aspect, an object of the present disclosure is to improve accuracy of a classification model trained by transductive transfer training.

### [SOLUTION TO PROBLEM]

According to an aspect of the embodiments, a machine learning program that causes at least one computer to execute a process, the process includes estimating a first label distribution that is a label distribution of unlabeled training data based on a classification model and an initial value of a label distribution of a transfer target domain, the classification model being trained by using labeled training data which corresponds to a transfer source domain and unlabeled training data which corresponds to the transfer target domain; acquiring a second label distribution based on the labeled training data; acquiring a weight of each label included in at least one training data selected from the labeled training data and the unlabeled training data based on a difference between the first label distribution and the second label distribution; and re-training the classification model by the labeled training data and the unlabeled training data, the labeled training data and the unlabeled training data being reflected the weight of each label.

### [ADVATAGEOUS EFFECTS OF INVENTION]

In the one aspect, the accuracy of the classification model trained by the transductive transfer training may be improved.

### BRIEF DESCRIPTION OF DRAWINGS

FIG. 1 is a diagram schematically illustrating a functional configuration of an information processing apparatus as an example of an embodiment;
FIG. 2 is a diagram for explaining reduction of a label distribution difference between a transfer source domain and a transfer target domain in the information processing apparatus as the example of the embodiment;
FIG. 3 is a diagram exemplifying a hardware configuration of the information processing apparatus as the example of the embodiment;
FIG. 4 is a flowchart for explaining processing of a training phase in the information processing apparatus as the example of the embodiment;
FIG. 5 is a diagram for explaining processing in the information processing apparatus as the example of the embodiment;
FIG. 6 is a diagram for explaining the processing in the information processing apparatus as the example of the embodiment;
FIG. 7 is a diagram for explaining the processing in the information processing apparatus as the example of the embodiment;
FIG. 8 is a diagram for explaining the processing in the information processing apparatus as the example of the embodiment;
FIG. 9 is a diagram for explaining processing of an inference phase in the information processing apparatus as the example of the embodiment;
FIG. 10 is a diagram illustrating a comparison between feature distributions before and after the training in the information processing apparatus as the example of the embodiment; and
FIG. 11 is a diagram illustrating a comparison between label distributions of the transfer source domain and label distributions of transfer target domain.

### DESCRIPTION OF EMBODIMENTS

Hereinafter, an embodiment of a machine learning program, a data processing program, an information processing apparatus, a method of machine learning, and a method of processing data will be described with reference to the drawings. The following embodiment is merely exemplary, and there is no intension of excluding application of various modification examples and techniques that are not explicitly described in the embodiment. For example, the present embodiment may be carried out while being variously modified within a scope not departing from the gist of the embodiment. The drawings are not provided with an intention that only the elements illustrated in the drawings are included. Other functions and the like may be included in the drawings.

### (A) Configuration

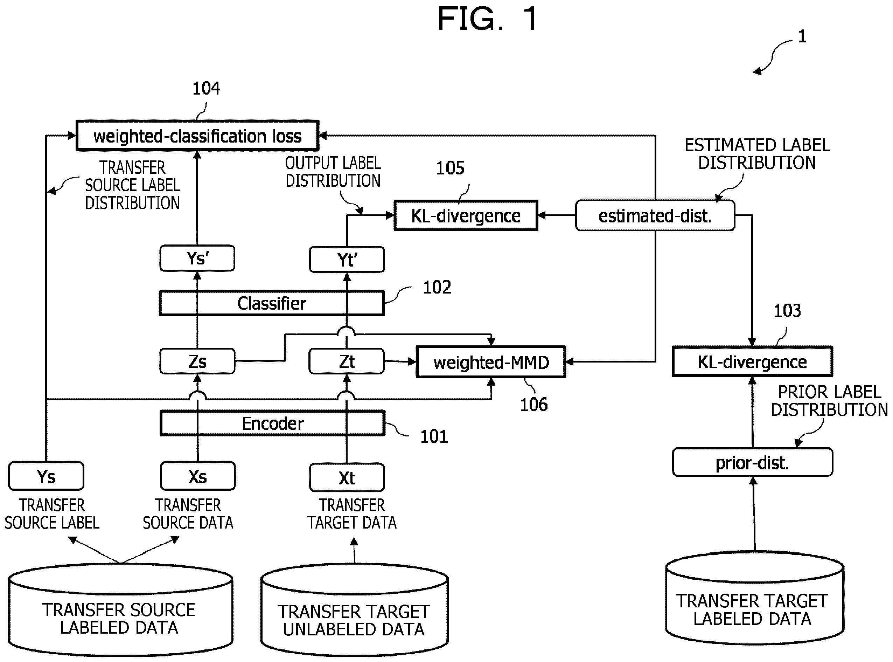

FIG. 1 is a diagram schematically illustrating a functional configuration of an information processing apparatus 1 as an example of the embodiment.

The information processing apparatus 1 realizes transductive training with respect to data classification that uses a machine learning model.

Transductive transfer training is transfer training of a classification model (machine learning model) using labeled training data corresponding to a transfer source domain (transfer source data) and unlabeled training data corresponding to a transfer target domain (transfer target data).

The information processing apparatus 1 trains the machine learning model with the labeled data in the first domain that is the transfer source (transfer source domain) and labels the unlabeled data in the transfer target domain by using this machine learning model.

As illustrated in FIG. 1, the information processing apparatus 1 includes an encoder 101, a classifier 102, a first training control unit 103, a second training control unit 104, a third training control unit 105, and a fourth training control unit 106.

The encoder 101 and the classifier 102 are included in the machine learning model.

First, an overview of a transductive transfer training technique in the information processing apparatus 1 as the example of the embodiment is described.

First, the information processing apparatus 1 weights data in the transfer source domain (transfer source data) or data in the transfer target domain (transfer target data) to reduce a difference (label distribution difference) between a label distribution of the transfer source data and a label distribution of the transfer target data. After that, transfer training is performed so that the distribution of features of the transfer source data coincides with the distribution of features of the transfer target data.

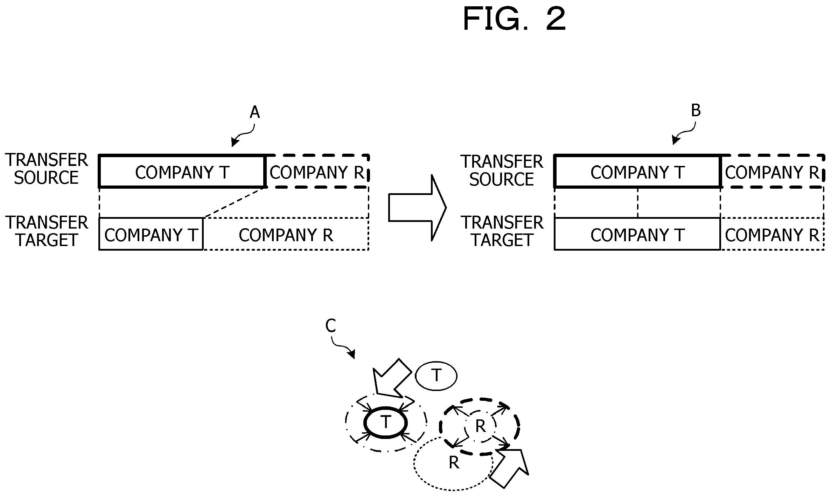

FIG. 2 is a diagram for explaining the reduction of the label distribution difference between the transfer source domain and the transfer target domain in the information processing apparatus 1 as the example of the embodiment.

Referring to FIG. 2, sign A indicates a state in which a label distribution difference exists between the transfer source domain and the transfer target domain, and sign B indicates a state in which the label distribution difference is reduced by weighting the data. Sign C indicates the distribution difference in feature between the transfer source data and the transfer target data.

FIG. 2 indicates label distributions of company T and company R in both the transfer source domain and the transfer target domain with respect to a classification model that presumes a manufacturer name from an image of an automobile. For example, company T is a Japanese manufacturer and company R is a French manufacturer. Each of signs A and B indicates an example in which the transfer source domain is Japan and the transfer target domain is France.

In the label distributions indicated by sign A, company T exceeds company R in the transfer source domain, whereas company R exceeds company T in the transfer target domain. For example, there is a difference in the label distribution between the transfer source domain and the transfer target domain.

In the information processing apparatus 1, the second training control unit 104 to be described later calculates the degree of influence of each piece of data such that the difference between the label distribution of the transfer source data and the estimated label distribution of the transfer target data reduces (such that the label distribution of the transfer source data coincides with the estimated label distribution of the transfer target data) and weights the transfer source data. For example, by weighting the transfer source data, the degree of influence on the machine learning is adjusted so as coincide with the label distribution of the transfer target data. The degree of influence is an index indicating the degree of influence exerted, by the difference in label distribution between the transfer source domain and the transfer target domain, on label estimation using machine learning or a trained machine learning model. Accordingly, as indicated by sign B, the label distribution difference between the transfer source domain and the transfer target domain is resolved. After that, as indicated sign C, the transfer training is performed so that the distribution of the features of the transfer source data coincides with the distribution of the features of the transfer target data.

However, since there is no correct answer label in the transfer target data in the transductive transfer training, the label distribution of the transfer target data is unknown.

Accordingly, this information processing apparatus 1 estimates the label distribution of the transfer target data based on the following characteristics (1) to (3).
(1) When the transfer is successful (when there is no difference between the domains), the distribution of the output of the machine learning model is the label distribution of the transfer target data. Thus, the label distribution of the transfer target data may be estimated.
(2) When the label distribution of the transfer target data is successfully estimated (when there is no difference in the label distribution), the transfer is successful.
(3) An inaccurate label distribution for the transfer target data may be estimated based on a small number of pieces of labeled data or human knowledge.

With respect to the machine learning model including the encoder 101 and the classifier 102 (see FIG. 1 for both), the information processing apparatus 1 simultaneously/repeatedly applies training for causing output distributions of the encoder 101 to be coincident with each other by using label distribution estimation by output of the machine learning model and data weighted by the estimated label distribution and performs transductive transfer training.

Next, functional configurations provided in the information processing apparatus 1 illustrated in FIG. 1 are described.

The encoder 101 performs feature extraction (calculation of features) on data having been input thereto (input data). The encoder 101 may perform feature extraction by using various known techniques, and specific description of the techniques is omitted.

According to the present embodiment, a label (correct answer data) is assigned to the data in the transfer source domain (hereinafter referred to as transfer source data). Hereinafter, the label assigned to the transfer source data may be referred to as a transfer source label. The transfer source data may also be referred to as transfer source labeled data. A combination of the transfer source data and the label (correct answer data) may be referred to as a transfer source data set.

The information processing apparatus 1 trains the machine learning model by using a training data set including a plurality of such transfer source data sets.

Referring to FIG. 1, the transfer source data is denoted by sign Xs. The label (transfer source label) assigned to the transfer source data is denoted by sign Ys. The data in the transfer target domain (hereinafter referred to as transfer target data) is denoted by reference sign Xt.

The encoder 101 calculates features Zs based on the transfer source data Xs and features Zt based on the transfer target data Xt.

The classifier 102 classifies the input data based on the features calculated by the encoder 101. The classifier 102 may classify the input data by using various known techniques, and specific description of the techniques is omitted.

Referring to FIG. 1, a classification result for transfer source data is denoted by sign Ys'. A classification result for transfer target data is denoted by sign Yt'.

The first training control unit 103 compares a prior label distribution (prior-dist.) with an estimated label distribution (estimated-dist.) and updates a value of the estimated label distribution (estimated-dist.) such that the estimated label distribution (estimated-dist.) approaches the prior label distribution (prior-dist.).

The estimated label distribution (estimated-dist.) is an estimated value of a label distribution in the transfer target domain and is a label distribution of unlabeled training data.

With the information processing apparatus 1, a predicted value of the label distribution in the transfer target domain is set in advance as the prior label distribution (prior-dist.).

As the prior label distribution, for example, a plurality of pieces of labeled (with the correct answer data) data in the transfer target domain (transfer target labeled data) may be prepared, and a distribution of the labels of the plurality of pieces of transfer target labeled data may be used. The number of the pieces of the transfer target labeled data may be small.

The prior label distribution is not limited to the above description and may be appropriately changed for performing. For example, a user may arbitrarily input the prior label distribution. As the prior label distribution (prior-dist.), the labels may be set to a uniform distribution. Also, the distribution of the labels may be randomly set.

A value of the prior label distribution (prior-dist.) may be used as an initial value of the estimated label distribution (estimated-dist.).

The first training control unit 103 updates (trains) the estimated label distribution (estimated-dist.) so as to reduce the distribution difference from the prior label distribution estimated from the transfer target labeled data or assigned by the user.

For example, the first training control unit 103 may use Kullback-Leibler divergence (KL-divergence) to compare the prior label distribution (prior-dist.) and the estimated label distribution (estimated-dist.). For example, the first training control unit 103 may update the estimated label distribution (estimated-dist.) so as to reduce the value of the KL-divergence.

Update of the estimated label distribution (estimated-dist.) by the first training control unit 103 may be realized by using a known technique. For example, in updating the estimated label distribution (estimated-dist.), the first training control unit 103 may add or subtract a predetermined value to or from a value of a distribution of a specific label in the estimated label distribution (estimated-dist.) such that the estimated label distribution (estimated-dist.) approaches the prior label distribution (prior-dist.).

Based on an initial value of the label distribution of the transfer target domain (the prior distribution generated from the labeled transfer target domain data) and the classification model, the first training control unit 103 estimates the estimated label distribution (estimated-dist.) that is the label distribution of the unlabeled training data.

According to the estimated label distribution (estimated-dist.) of the transfer target, the second training control unit 104 weights the data of the transfer source.

Based on the labels of the transfer source data (transfer source labels), the second training control unit 104 calculates (measures) the label distribution in the transfer source domain (transfer source label distribution).

Based on the transfer source label distribution and the estimated label distribution (estimated-dist.), the second training control unit 104 calculates the weight of the data on a label-by-label basis. The weight may be set for the transfer source data or the transfer target data. An example in which the second training control unit 104 performs weighting on the transfer source data is described below.

The second training control unit 104 calculates the degree of influence of each piece of data so as to reduce the difference (distribution difference) between the label distribution of the weighted transfer source data and the estimated label distribution of the transfer target.

For example, for a label L, in a case where the proportion of the data of the label L in the transfer source data is ps and the proportion of the data of L in the estimated label distribution of the transfer target is pt, the second training control unit 104 weights the transfer source data such that the degree of influence of the transfer source data of the label L is pt/ps times.

For example, the second training control unit 104 calculates the weight related to an object label by reflecting in the degree of influence of the object label the ratio between the proportion of the data of the object label in the transfer source data (labeled training data) and the proportion (the proportion of the estimated data) of the data for which the object label is estimated in the transfer target data (unlabeled training data).

The second training control unit 104 calculates the weight related to the object label by reflecting in the degree of influence of the object label the ratio between the proportion of the data of the object label in the labeled training data and the proportion of the data for which the object label is estimated in the unlabeled training data.

The second training control unit 104 performs the similar process on each label while sequentially changing the object labels, thereby setting the degree of influence of each piece of data for the transfer source data to obtain coincidence with the estimated label distribution of the transfer target.

The second training control unit 104 performs training (machine learning) on the machine learning model (the encoder 101 and the classifier 102) by using the training data set.

The machine learning model is configured by using a neural network. When input data to be classified is input, the machine learning model performs classification (labeling, classification) of the input data.

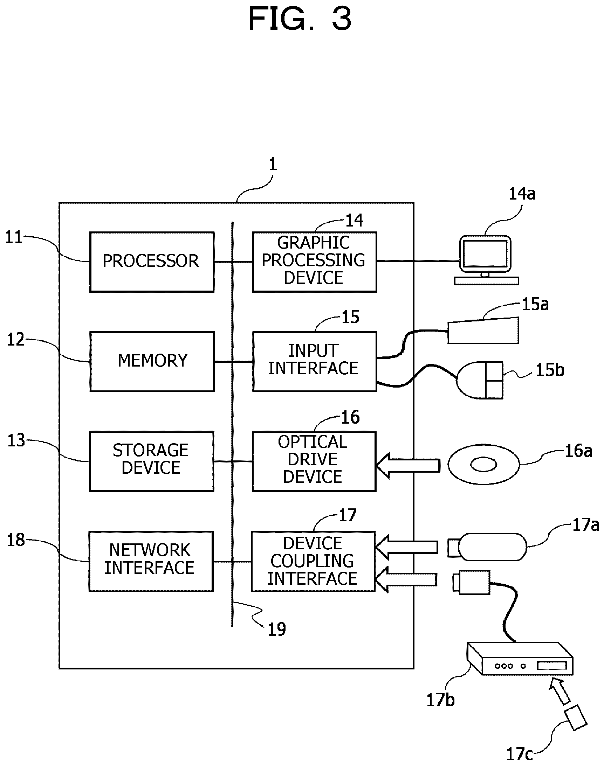

The neural network may be a hardware circuit or a virtual network by software that couples layers virtually built in a computer program by a processor 11 to be described later (see FIG. 3). The neural network may be referred to as "NN".

The second training control unit 104 performs the training on the machine learning model (the encoder 101 and the classifier 102) by using the transfer source data (Xs) weighted as described above and the correct answer data (Ys) corresponding to the transfer source data (Xs). For example, the second training control unit 104 repeatedly performs a process of updating parameters (training parameters) of the neural network of the machine learning model (the encoder 101 and the classifier 102) so as to reduce an error between the classification result (Ys') which is an output of the machine learning model and the correct answer data (Ys).

The second training control unit 104 updates the training parameters of the classifier 102 and the encoder 101 so as to reduce the classification error of the weighted transfer source data, thereby realizing the training of the machine learning model.

The second training control unit 104 performs a training process by reflecting the updated estimated label distribution (estimated-dist.) as the weight in the training data corresponding to the transfer source domain or the training data corresponding to the transfer target domain.

The third training control unit 105 measures the label distribution of the classification result (Yt') for the transfer source data (output label distribution).

The third training control unit 105 compares the output label distribution with the estimated label distribution (estimated-dist.) and updates the value of the estimated label distribution (estimated-dist.) such that the estimated label distribution (estimated-dist.) approaches the output label distribution. This information processing apparatus 1 uses this estimated label distribution (estimated-dist.) as the label distribution of the transfer target data. The reason for this is that the output label distribution of the machine learning model in a case where the transfer is successful may be regarded as the label distribution of the transfer target data.

The third training control unit 105 updates (trains) the estimated label distribution (estimated-dist.) so as to reduce the distribution difference from the distribution of the output label (output label distribution) of the classifier 102 for the transfer target data.

For example, the third training control unit 105 may use KL-divergence to compare the output label distribution and the estimated label distribution (estimated-dist.).

The update of the estimated label distribution (estimated-dist.) by the third training control unit 105 may be realized by using a known technique. For example, in updating the estimated label distribution (estimated-dist.), the third training control unit 105 may add or subtract a predetermined value to or from a value of a distribution of a specific label in the estimated label distribution (estimated-dist.) such that the estimated label distribution (estimated-dist.) approaches the output label distribution. The third training control unit 105 updates the estimated label distribution (estimated-dist.) so as to reduce the value of the KL-divergence.

The third training control unit 105 updates the estimated label distribution (estimated-dist.) so as to reduce the difference between the estimated label distribution (estimated-dist.) and the label distribution (output distribution of the model: Yt') obtained from an estimation result by the machine learning model (classification model).

The fourth training control unit 106 trains (performs the machine learning on) the encoder 101 so as to reduce the difference (distribution difference) between the distribution of the features of the transfer source data (Zs) weighted as described above and the distribution of the features of the transfer target data (Zt).

The fourth training control unit 106 may use, for example, maximum mean discrepancy (MMD) to compare the prior label distribution (prior-dist.) and the estimated label distribution (estimated-dist.).

As described above, the second training control unit 104 sets the weight of the transfer source data on a label-by-label basis so as to reduce the distribution difference between the transfer source label distribution and the estimated label distribution (estimated-dist.). Measurement of the difference (distribution difFerence) between the distribution of the features Zs of the weighted transfer source data and the distribution of the features Zt of the transfer target data by using MMD as described above may be referred to as a weighted-MMD.

The fourth training control unit 106 updates (trains) the parameter (training parameter) of the encoder 101 so as to reduce the difference (distribution difFerence) between the distribution of the features Zs of the weighted transfer source data and the distribution of the features Zt of the transfer target data.

FIG. 3 is a diagram exemplifying a hardware configuration of the information processing apparatus 1 as an example of the embodiment.

The information processing apparatus 1 includes, for example, the processor 11, a memory 12, a storage device 13, a graphic processing device 14, an input interface 15, an optical drive device 16, a device coupling interface 17, and a network interface 18 as elements. These elements 11 to 18 are mutually communicably configured via a bus 19.

The processor (processing unit) 11 controls the entirety of the information processing apparatus 1. The processor 11 may be a multiprocessor. The processor 11 may be any one of, for example, a central processing unit (CPU), a microprocessor unit (MPU), a digital signal processor (DSP), an application-specific integrated circuit (ASIC), a programmable logic device (PLD), a field-programmable gate array (FPGA), and a graphics processing unit (GPU). The processor 11 may be a combination of two or more types of the elements out of the CPU, the MPU, the DSP, the ASIC, the PLD, the FPGA, and the GPU.

The processor 11 executes control programs (the machine learning program, the data processing program, and an operating system (OS) program) for the information processing apparatus 1 to function as the encoder 101, the classifier 102, the first training control unit 103, the second training control unit 104, the third training control unit 105, and the fourth training control unit 106 exemplified in FIG. 1.

The information processing apparatus 1 executes the programs (the machine learning program and the OS program) recorded in, for example, a non-transitory computer-readably recording medium to realize the functions as the encoder 101, the classifier 102, the first training control unit 103, the second training control unit 104, the third training control unit 105, and the fourth training control unit 106.

The information processing apparatus 1 executes the programs (the data processing program, the OS program) recorded in, for example, a computer-readable non-transitory recording medium to realize the functions of the encoder 101 and the classifier 102.

Programs in which the content of processing to be executed by the information processing apparatus 1 is described may be recorded in various recording media. For example, the programs to be executed by the information processing apparatus 1 may be stored in the storage device 13. The processor 11 loads at least part of the programs in the storage device 13 onto the memory 12 and executes the loaded program.

The programs to be executed by the information processing apparatus 1 (processor 11) may be recorded in a non-transitory portable-type recording medium such as an optical disc 16a, a memory device 17a, and a memory card 17c. For example, the programs stored in the portable-type recording medium become executable after being installed in the storage device 13 under the control from the processor 11. The processor 11 may execute the programs by reading the programs directly from the portable-type recording medium.

The memory 12 is a storage memory including a read-only memory (ROM) and a random-access memory (RAM). The RAM of the memory 12 is used as a main storage device of the information processing apparatus 1. The programs to be executed by the processor 11 are at least partially stored in the RAM temporarily. Various types of data desired for the processing by the processor 11 are stored in the memory 12.

The storage device 13 is a storage device such as a hard disk drive (HDD), a solid-state drive (SSD), or a storage class memory (SCM) and stores various types of data. The storage device 13 is used as an auxiliary storage device of the information processing apparatus 1. The OS program, the control programs, and various types of data are stored in the storage device 13. The control programs include the machine learning program and the data processing program.

A semiconductor storage device such as an SCM or a flash memory may be used as the auxiliary storage device. Redundant arrays of inexpensive disks (RAID) may be configured with a plurality of storage devices 13.

The storage device 13 may store various types of data generated when the encoder 101, the classifier 102, the first training control unit 103, the second training control unit 104, the third training control unit 105, and the fourth training control unit 106 described above execute processes.

A monitor 14a is coupled to the graphic processing device 14. The graphic processing device 14 displays an image in a screen of the monitor 14a in accordance with an instruction from the processor 11. Examples of the monitor 14a include a display device using a cathode ray tube (CRT), a liquid crystal display device, and so forth.

A keyboard 15a and a mouse 15b are coupled to the input interface 15. The input interface 15 transmits signals received from the keyboard 15a and the mouse 15b to the processor 11. The mouse 15b is an example of a pointing device, and a different pointing device may be used. Examples of the different pointing device include a touch panel, a tablet, a touch pad, a track ball, and so forth.

The optical drive device 16 reads data recorded in the optical disc 16a by using laser light or the like. The optical disc 16a is a portable-type non-transitory recording medium in which data is recorded in such a way that the data is readable by using light reflection. Examples of the optical disc 16a include a Digital Versatile Disc (DVD), a DVD-RAM, a compact disc ROM (CD-ROM), a CD-recordable (R)/rewritable (RW), and the like.

The device coupling interface 17 is a communication interface for coupling peripheral devices to the information processing apparatus 1. For example, the memory device 17a or a memory reader/writer 17b may be coupled to the device coupling interface 17. The memory device 17a is a non-transitory recording medium such as a Universal Serial Bus (USB) memory that has a function of communicating with the device coupling interface 17. The memory reader/writer 17b writes data to the memory card 17c or reads data from the memory card 17c. The memory card 17c is a card-type non-transitory recording medium.

The network interface 18 is coupled to a network. The network interface 18 exchanges data via the network. Other information processing apparatuses, communication devices, and so forth may be coupled to the network.

In the information processing apparatus 1, the processor 11 executes the machine learning program to realize the functions as the encoder 101, the classifier 102, the first training control unit 103, the second training control unit 104, the third training control unit 105, and the fourth training control unit 106. These units including the encoder 101, the classifier 102, the first training control unit 103, the second training control unit 104, the third training control unit 105, and the fourth training control unit 106 function in a training phase.

The processor 11 executes the data processing program to realize the functions as the encoder 101 and the classifier 102. These units including the encoder 101 and the classifier 102 function in an inference phase.

### (B) Operation

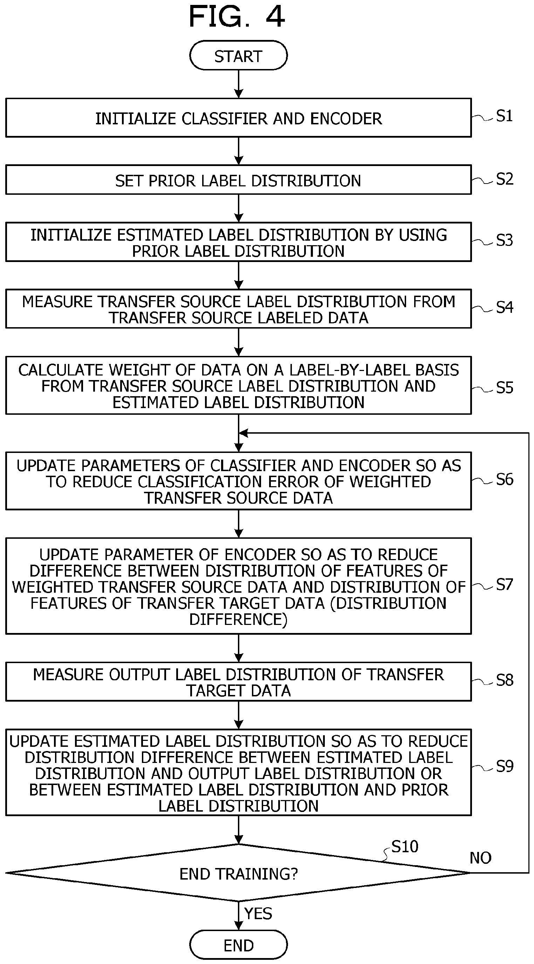

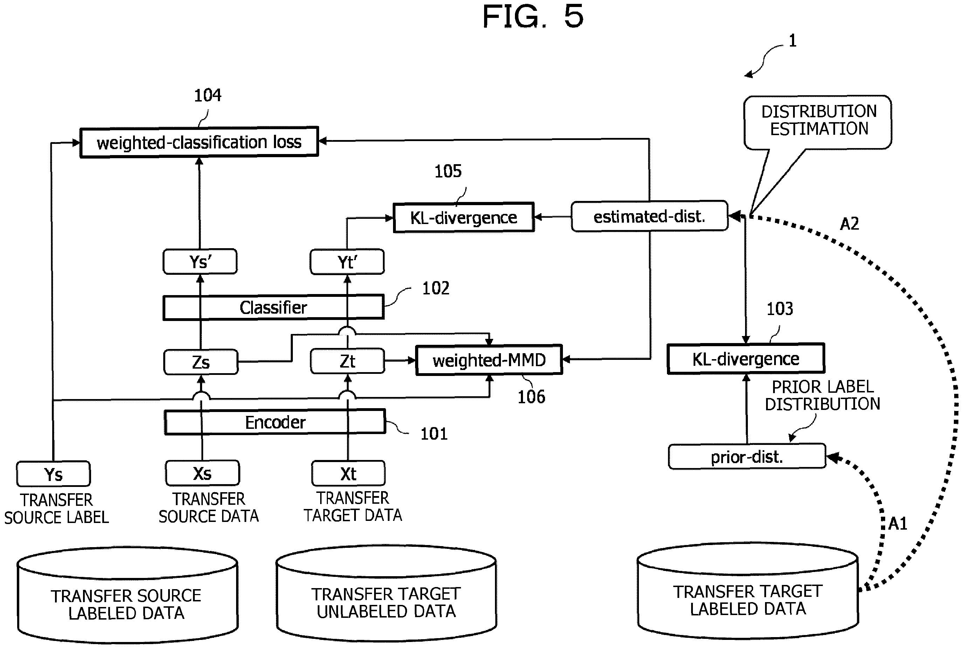

Processing of the training phase in the information processing apparatus 1 as the example of the embodiment configured as described above is described in accordance with a flowchart illustrated in FIG. 4 (steps S1 to S10) with reference to FIGs. 5 to 8. FIGs. 5 to 8 are diagrams for explaining the processing executed by the information processing apparatus 1.

In step S1, for example, the second training control unit 104 initializes the encoder 101 and the classifier 102 included in the machine learning model.

In step S2, the predicted value of the label distribution in the transfer target domain is set in advance as the prior label distribution (prior-dist.), (see sign A1 of FIG. 5). For example, the user may set the distribution of the labels of the plurality of pieces of transfer target labeled data as the prior label distribution (prior-dist.).

In step S3, the first training control unit 103 initializes the estimated label distribution (estimated-dist.) by using the value of the prior label distribution (prior-dist.), (see sign A2 of FIG. 5).

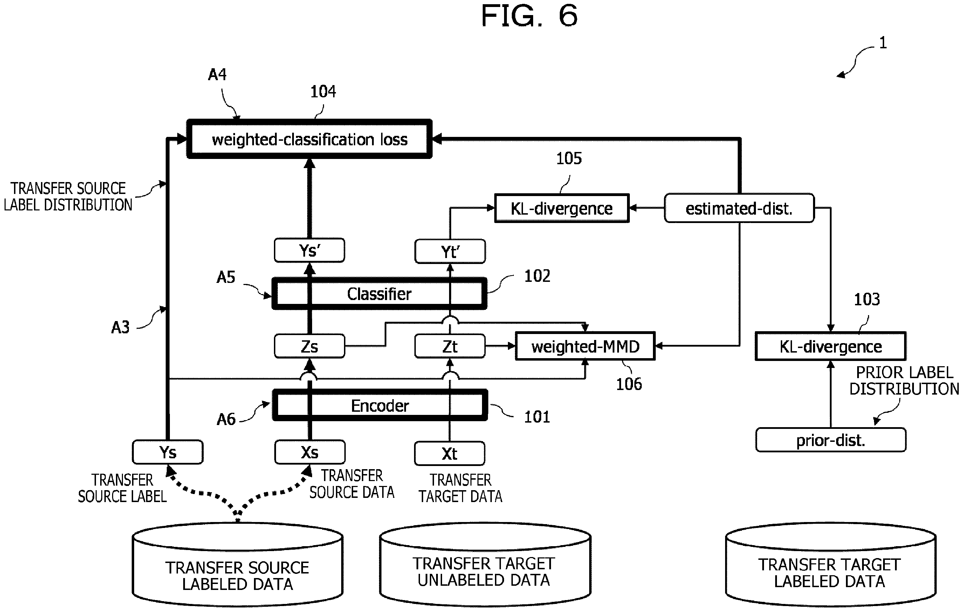

In step S4, based on the labels of the transfer source data (transfer source label), the second training control unit 104 calculates (measures) the label distribution in the transfer source domain (transfer source label distribution), (see sign A3 of FIG. 6).

In step S5, based on the transfer source label distribution and the estimated label distribution (estimated-dist.), the second training control unit 104 calculates the weight of the data on a label-by-label basis (see sign A4 of FIG. 6).

In step S6, the second training control unit 104 performs the training on the machine learning model (the encoder 101 and the classifier 102) by using the weighted transfer source data and the correct answer data corresponding to the transfer source data (see signs A5 and A6 of FIG. 6). Accordingly, the second training control unit 104 performs the process of updating the training parameters of the neural network of the machine learning model (the encoder 101 and the classifier 102) so as to reduce the error between the classification result which is the output of the machine learning model and the correct answer data.

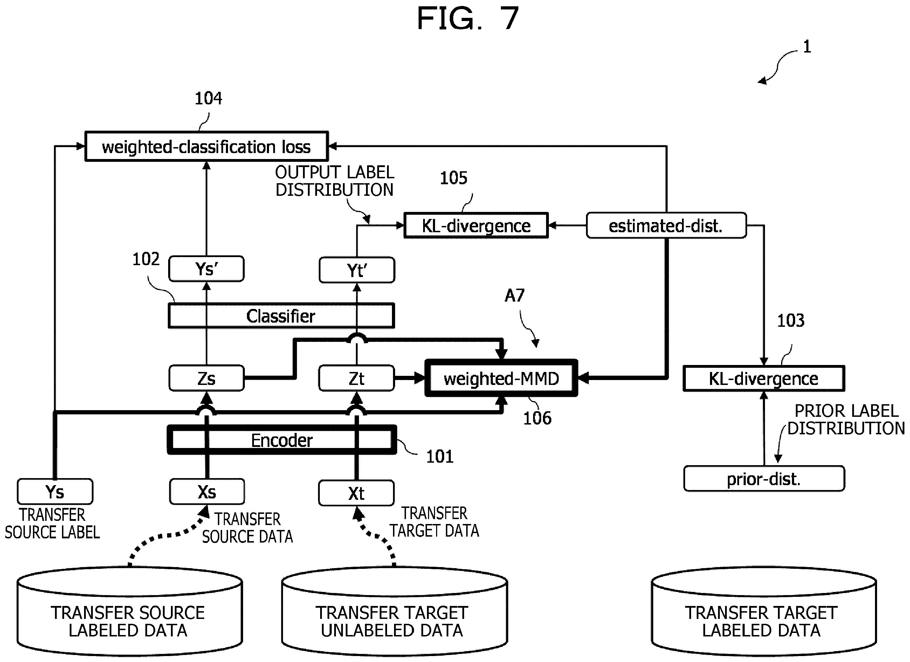

In step S7, the fourth training control unit 106 updates (trains) the parameter (training parameter) of the encoder 101 so as to reduce the difference (distribution difFerence) between the distribution of the features of the weighted transfer source data and the distribution of the features of the transfer target data (see sign A7 of FIG. 7).

In step S8, the third training control unit 105 measures the label distribution of the classification result for the transfer source data (output label distribution).

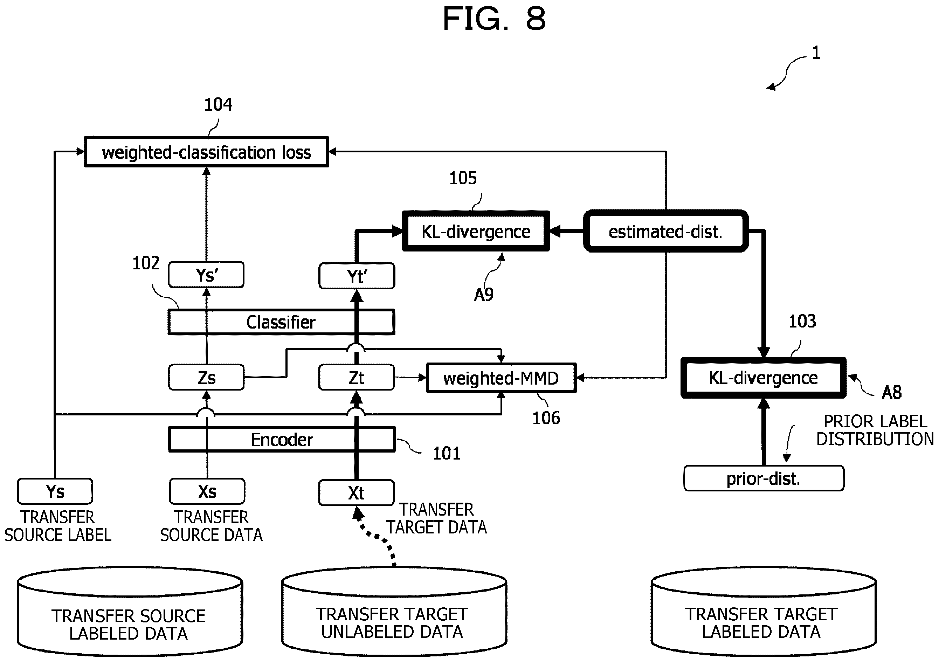

In step S9, the value of the estimated label distribution (estimated-dist.) is updated. For example, at the first time, the first training control unit 103 compares the prior label distribution (prior-dist.) with the estimated label distribution (estimated-dist.) and updates the value of the estimated label distribution (estimated-dist.) such that the estimated label distribution (estimated-dist.) approaches the prior label distribution (prior-dist.), (see sign A8 of FIG. 8).

From the second time, the third training control unit 105 compares the output label distribution with the estimated label distribution (estimated-dist.) and updates the value of the estimated label distribution (estimated-dist.) such that the estimated label distribution (estimated-dist.) approaches the output label distribution (see sign A9 of FIG. 8).

After that, in step S10, whether a training end condition is satisfied is checked. For example, the training end condition may be determined to be satisfied in a case where the number of times of training performed by using the training data reaches a predetermined number of epochs or in a case where accuracy of the machine learning model reaches a predetermined threshold.

In a case where the training end condition is not satisfied (see a NO route in step S10), the processing returns to step S5. In a case where the training end condition is satisfied (see YES route in step S10), the processing ends.

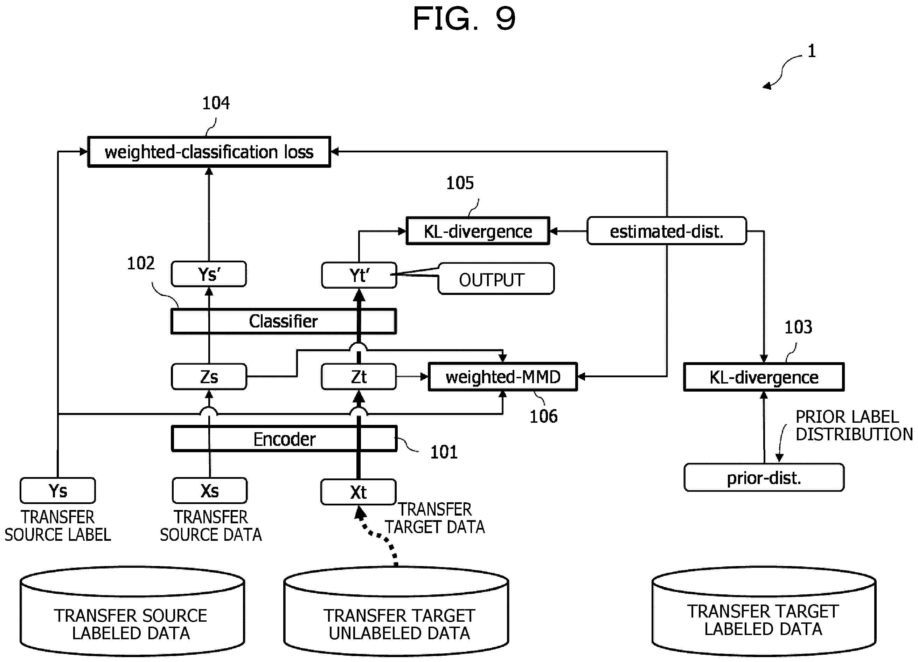

Next, processing of the inference phase in the information processing apparatus 1 as the example of the embodiment is described with reference to FIG. 9.

In the inference phase, the transfer target data Xt is input to the encoder 101. The encoder 101 calculates the features Zt based on the transfer target data Xt. The classifier 102 classifies the input data based on the features calculated by the encoder 101 and outputs the classification result Yt'.

### (C) Effects

As described above, with the information processing apparatus 1 as the example of the embodiment, the second training control unit 104 sets the degree of influence of the transfer source data so as to reduce the difference between the label distribution of the transfer source data and the estimated label distribution of the transfer target data and weights the transfer source data. Accordingly, the difference in distribution of features between the transfer source data and the transfer target data reduces, and, in the inference phase, the accuracy of classification of the transfer target data is improved.

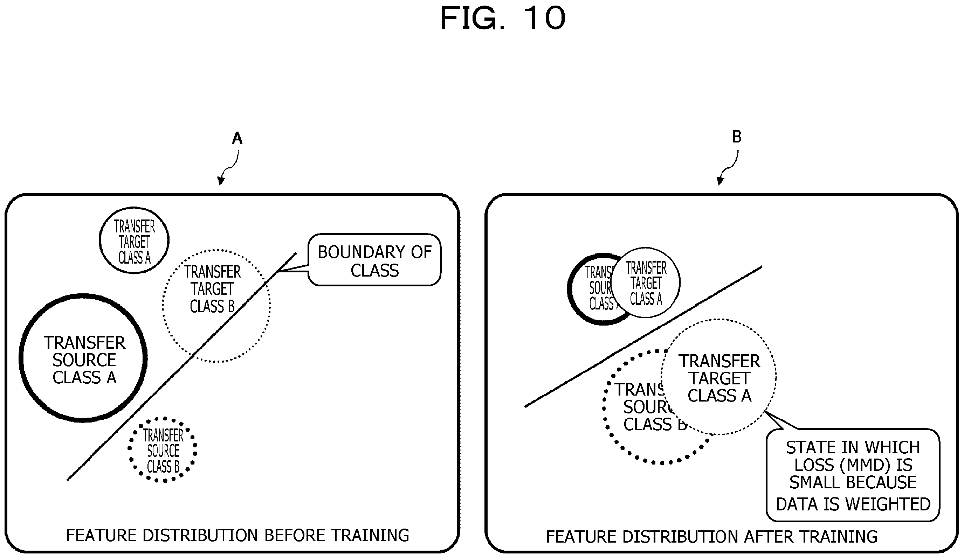

FIG. 10 is a diagram illustrating a comparison between feature distributions before and after the training in the information processing apparatus 1 as the example of the embodiment.

In FIG. 10, sign A indicates a feature distribution before the training and sign B indicates a feature distribution after the training. As indicated by reference sign A, before the training, distributions of features of class A and features of class B in the transfer source domain are different from distributions of the features of class A and the features of class B in the transfer target domain. The transfer target data is not necessarily correctly classified into the classes with a boundary of the classes set based on the transfer source data.

In the information processing apparatus 1, the degree of influence of each piece of data is calculated such that the difference between the label distribution of the transfer source data and the estimated label distribution of the transfer target data reduces (or, such that the label distribution of the transfer source data and the estimated label distribution of the transfer target data coincide with each other) and the weights are assigned to the transfer source data. The machine learning model (the encoder 101 and the classifier 102) is trained by using the transfer source data weighted as described above. The encoder 101 is trained (undergoes the machine learning) so as to reduce the difference (distribution difFerence) between the distribution of the features of the weighted transfer source data and the distribution of the features of the transfer target data.

As indicated by sign B of FIG. 10, in the machine learning model having undergone such training, the difference between distributions of class A and class B in the transfer source domain and distributions of class A and class B in the transfer target domain reduces, and the transfer target data may be correctly classified into the classes with the boundary of the classes set based the transfer source data. For example, the classification accuracy in the inference phase is improved. Since the weight is assigned to the transfer source data, the loss (MMD) is reduced.

Accordingly, in the information processing apparatus 1, even in a situation in which the domains are different and the label distributions are different, the transductive transfer training may be performed, and, in addition, the classification accuracy of the transductive transfer training may be improved.

In the information processing apparatus 1, the third training control unit 105 updates (estimates) the estimated label distribution by using the output of the machine learning model including the encoder 101 and the classifier 102. The second training control unit 104 performs weighting on the transfer source data based on this estimated label distribution. Accordingly, the difference between the label distribution in the transfer source data and the label distribution in the transfer target data (label distribution difFerence) may be reduced.

The fourth training control unit 106 simultaneously/repeatedly applies the training for causing the output distributions of the encoder 101 to be coincident with each other by using the weighted transfer source data and performs the transfer training. Accordingly, the distributions of the features in the transfer source domain and the features in the transfer target domain may coincide with each other, and reduction of accuracy due to the transductive transfer training may be suppressed.

The information processing apparatus 1 is provided with, as the parameter, the estimated label distribution indicating the estimated distribution of the labels of transfer target data in real time to train the encoder 101 and the classifier 102.

In so doing, at initial time, the first training control unit 103 updates (trains) the estimated label distribution (estimated-dist.) so as to reduce the difference from the output label distribution estimated from the transfer target labeled data or the prior label distribution assigned by the user. Accordingly, the estimated label distribution of the transfer target data may be determined even in the transductive transfer training.

The third training control unit 105 updates (trains) the estimated label distribution (estimated-dist.) so as to reduce the distribution difference from the distribution of the output label (output label distribution) of the classifier 102 for the transfer target data. Accordingly, the estimated label distribution (estimated-dist.) may be maintained in the latest state, and reduction of the accuracy due to the transductive transfer training may be suppressed by reflecting in the weights reflected in the transfer source data or the training parameter of the encoder 101.

The fourth training control unit 106 updates (trains) the parameter (training parameter) of the encoder 101 so as to reduce the difference (distribution difFerence) between the distribution of the features Zs of the weighted transfer source data and the distribution of the features Zt of the transfer target data. Accordingly, reduction of the accuracy in the transductive transfer training caused by the difference (distribution difFerence) between the distribution of the features Zs of the transfer source data and the distribution of the features Zt of the transfer target data may be suppressed.

The second training control unit 104 updates the parameters of the classifier 102 and the encoder 101 so as to reduce the classification error of the weighted transfer source data, thereby realizing the training of the machine learning model. Accordingly, the machine learning model (the classifier 102 and the encoder 101) is trained by using the transfer source data that has been weighted so as to reduce the difference between the label distribution of the transfer source data and the estimated label distribution of the transfer target data. Accordingly, reduction of the accuracy in the transductive transfer training caused by the difference (label distribution difference) between the label distribution of the transfer source data and the label distribution of the transfer target data may be suppressed.

### (D) Others

The configurations and processes according to the present embodiment may be selectively employed or omitted as desired or may be combined as appropriate.

The disclosed technique is not limited to the above-described embodiment and may be carried out while being modified in various ways without departing from the gist of the present embodiment.

For example, although an example in which the first training control unit 103 and the third training control unit 105 use the KL-divergence as a distance scale for comparing the label distributions has been described in the above-described embodiment, the embodiment is not limited thereto. For example, another technique such as Pearson distance may be used instead of the KL distance, and may be appropriately changed for implementation.

The above-described disclosure enables a person skilled in the art to carry out and manufacture the present embodiment.

## Claims

1. A machine learning program that causes at least one computer to execute a process, the process comprising:
estimating a first label distribution that is a label distribution of unlabeled training data based on a classification model and an initial value of a label distribution of a transfer target domain, the classification model being trained by using labeled training data which corresponds to a transfer source domain and unlabeled training data which corresponds to the transfer target domain;
acquiring a second label distribution based on the labeled training data;
acquiring a weight of each label included in at least one training data selected from the labeled training data and the unlabeled training data based on a difference between the first label distribution and the second label distribution; and
re-training the classification model by the labeled training data and the unlabeled training data, the labeled training data and the unlabeled training data being reflected the weight of each label.

2. The machine learning program according to claim 1, wherein the process further comprising
acquiring a weight related to a first label in the labeled training data based on a ratio between a first proportion of data with the first label in the labeled training data and a second proportion of data estimated to have the first label in the unlabeled training data.

3. The machine learning program according to claim 1, wherein the process further comprising
training the classification model so as to reduce a difference between a distribution of features of the labeled training data in which the weight has been reflected and a distribution of features of the unlabeled training data.

4. A machine learning apparatus comprising:
a control unit configured to:
estimate a first label distribution that is a label distribution of unlabeled training data based on a classification model and an initial value of a label distribution of a transfer target domain, the classification model being trained by using labeled training data which corresponds to a transfer source domain and unlabeled training data which corresponds to the transfer target domain,
acquire a second label distribution based on the labeled training data,
acquire a weight of each label included in at least one training data selected from the labeled training data and the unlabeled training data based on a difference between the first label distribution and the second label distribution, and
re-train the classification model by the labeled training data and the unlabeled training data, the labeled training data and the unlabeled training data being reflected the weight of each label.

5. The machine learning apparatus according to claim 4, wherein the control unit is further configured to
acquire a weight related to a first label in the labeled training data based on a ratio between a first proportion of data with the first label in the labeled training data and a second proportion of data estimated to have the first label in the unlabeled training data.

6. The machine learning apparatus according to claim 4 or 5, wherein the control unit is further configured to
train the classification model so as to reduce a difference between a distribution of features of the labeled training data in which the weight has been reflected and a distribution of features of the unlabeled training data.

7. A machine learning method for a computer to execute a process comprising:
estimating a first label distribution that is a label distribution of unlabeled training data based on a classification model and an initial value of a label distribution of a transfer target domain, the classification model being trained by using labeled training data which corresponds to a transfer source domain and unlabeled training data which corresponds to the transfer target domain;
acquiring a second label distribution based on the labeled training data;
acquiring a weight of each label included in at least one training data selected from the labeled training data and the unlabeled training data based on a difference between the first label distribution and the second label distribution; and
re-training the classification model by the labeled training data and the unlabeled training data, the labeled training data and the unlabeled training data being reflected the weight of each label.

8. The machine learning method according to claim 7, wherein the process further comprising
acquiring a weight related to a first label in the labeled training data based on a ratio between a first proportion of data with the first label in the labeled training data and a second proportion of data estimated to have the first label in the unlabeled training data.

9. The machine learning method according to claim 7 or 8, wherein the process further comprising
training the classification model so as to reduce a difference between a distribution of features of the labeled training data in which the weight has been reflected and a distribution of features of the unlabeled training data.
